# EUROPEAN PATENT SPECIFICATION

(11) **EP 2 846 569 B1**
(45) Date of publication and mention of the grant of the patent: **14.06.2017**
(21) Application number: 13813204.8
(22) Date of filing: 19.06.2013
(51) Int. Cl.: H04W 12/04, H04W 76/02, H04L 29/06

(54) **METHOD FOR ESTABLISHING DIRECT LINK, AND KEY UPDATING METHOD AND DEVICE**
VERFAHREN ZUR HERSTELLUNG EINER DIREKTEN VERBINDUNG SOWIE VERFAHREN UND VORRICHTUNG ZUR SCHLÜSSELAKTUALISIERUNG
PROCÉDÉ POUR L'ÉTABLISSEMENT D'UNE LIAISON DIRECTE, ET PROCÉDÉ ET DISPOSITIF POUR LA MISE À JOUR D'UNE CLÉ

(30) Priority: 03.07.2012 CN 201210226264
(43) Date of publication of application: 11.03.2015
(73) Proprietor: Huawei Device Co., Ltd., Shenzhen, Guangdong 518129 (CN)
(72) Inventor: LU, Su, Shenzhen Guangdong 518129 (CN); DING, Zhiming, Shenzhen Guangdong 518129 (CN); SHU, Guiming, Shenzhen Guangdong 518129 (CN)
(74) Representative: Thun, Clemens
(86) International application number: PCT/CN2013/077431
(87) International publication number: WO 2014/005482

(56) References cited:
- CN-A- 101 471 829
- CN-A- 101 594 578
- CN-A- 102 255 723
- CN-A- 102 461 317
- US-A1- 2008 298 328
- US-A1- 2010 255 869
- US-A1- 2012 087 356

## Description

### TECHNICAL FIELD

The present invention relates to communications technologies, and in particular, to a direct link setup method, a key updating method and device.

### BACKGROUND

A station (Station, STA) communicates with an AP (Access Point, AP) by using power negotiated with the access point. A different rate exists when a STA at a different location in a coverage area of an AP directly communicates with the AP; therefore, when a STA that has a relatively long distance from the AP communicates with the AP, a relay device (Relay) is required to forward data to shorten communication time between the STA and the AP.

In the prior art, a method for generating a key to a direct link between a STA and a Relay is as follows: The STA generates a random number and carry the random number to a setup request to be sent to an AP, and the AP sends the random number to the Relay by using the setup request. After receiving the random number generated by the STA, the Relay generates a random number, and calculates the random number generated by the STA and the random number generated by the Relay, to generate a key used to decrypt service data sent by the STA to the Relay. The Relay adds the random number generated by the Relay to a setup response to be sent to the AP, and the AP sends, by using the setup response, the random number generated by the Relay to the STA and calculates the random number generated by the STA and the random number generated by the Relay, to generate a key used to encrypt the service data sent by the STA to the Relay, thereby causing a high signaling overhead.

Document US 2008/0298328 A1 discloses a method for establishing a direct WLAN communication with station-to-station link (STSL): station A creates a random number R-A and a list of the cipher suites, and transmits them to station B through an access point; after receiving the information through the access point, station B creates two random number R-B and R-AB, then uses these information to calculate a KeyID; station B transmits some information to station A through the access point; station A uses these information to verify addresses for station A and station B, and calculates the value of KeyID; then station A initiates a handshake exchange with station B, after that, station A and station B communicates directly with each other using a STSL.

Document US 2010/0255869 A1 discloses a communications process through which two wireless network devices in two different networks can establish a direct communications link with each other, so that communications between the two devices do not have to go through the respective network controllers.

### SUMMARY

Embodiments of the present invention provide a direct link setup method, a key updating method, and a device, so as to save a signaling overhead.

According to one aspect, an embodiment of the present invention provides a direct link setup method, including:
sending, by a request station, a direct link setup request message to an access point;
sending, by the access point, the direct link setup request message to a requested station, wherein the direct link setup request message is used to request setup of a direct link between the request station and the requested station;
generating, by the requested station, first key information, wherein the first key information is used to perform secure transmission for service data transmitted in the direct link between the request station and the requested station;
sending, by the requested station, a direct link setup response message to the access point, wherein the direct link setup response message carries the first key information;
sending, by the access point, the direct link setup response message to the request station;
receiving, by the request station, the direct link setup response message sent by the access point;
encrypting, by the request station, a first direct link setup confirm message using the first key information, to generate first message integrity code MIC; wherein the first direct link setup confirm message is used to indicate that the request station has received the first key information;
sending, by the request station, a first direct link setup confirm message to the requested station, wherein the first direct link setup confirm message carries the first MIC;
performing, by the requested station, integrity verification for the first key information received by the request station according to the first MIC;
sending, by the requested station, a first acknowledgment message to the request station by using a direct link when the integrity verification for the first key information succeeds, wherein the first acknowledgment message is used to indicate that the integrity verification performed for the first key information received by the request station succeeds;
wherein the method further includes:
   receiving, by the request station, second key information sent by the access point, wherein the second key information is generated by the requested station, and the second key information is used to replace the first key information to perform secure transmission for the service data transmitted in the direct link between the request station and the requested station;
   sending, by the request station, a second direct link setup confirm message to the requested station by using the direct link, wherein the second direct link setup confirm message is used to indicate that the request station has received the second key information generated by the requested station..

According to the link setup method provided in the embodiment of the present invention, after receiving a direct link setup request message forwarded by an access point, a requested station adds, to a direct link setup response message to be returned to the access point, key information generated by the requested station, so that after the access point returns the direct link setup response message to a request station, the request station can perform, according to the key information, secure transmission for service data transmitted in a direct link between the request station and the requested station, so as to save a signaling overhead in a setup process of the link between the request station and the requested station.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a flowchart of an embodiment of a direct link setup method according to the present invention;
FIG. 2 is a flowchart of another embodiment of a direct link setup method according to the present invention;
FIG. 3 is a flowchart of yet another embodiment of a direct link setup method according to the present invention;
FIG. 4 is a flowchart of yet another embodiment of a direct link setup method according to the present invention;
FIG. 5 is a flowchart of yet another embodiment of a direct link setup methodaccording to the present invention;
FIG. 6 is a flowchart of yet another embodiment of a direct link setup method according to the present invention;
FIG. 7 is a flowchart of yet another embodiment of a direct link setup method according to the present invention;
FIG. 8 is a flowchart of yet another embodiment of a direct link setup method according to the present invention;
FIG. 9 is a schematic structural diagram of an embodiment of a requested station according to the present invention;
FIG. 10 is a schematic structural diagram of an embodiment of a request station according to the present invention;
FIG. 11 is a schematic structural diagram of another embodiment of a requested station according to the present invention;
FIG. 12 is a schematic structural diagram of another embodiment of a requested station according to the present invention;
FIG. 13 is a schematic structural diagram of another embodiment of a request station according to the present invention; and
FIG. 14 is a schematic structural diagram of another embodiment of a request station according to the present invention.

### DESCRIPTION OF EMBODIMENTS

To make the objectives, technical solutions, and advantages of the embodiments of the present invention clearer, the following clearly and describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

Technologies described in this specification may be applied to various communications systems, for example, current 2G and 3G communications systems and a next-generation communications system, for example, a Global System for Mobile Communications (GSM, Global System for Mobile Communications), a Code Division Multiple Access (CDMA, Code Division Multiple Access) system, a Time Division Multiple Access (TDMA, Time Division Multiple Access) system, a Wideband Code Division Multiple Access (WCDMA, Wideband Code Division Multiple Access) system, a Frequency Division Multiple Access (FDMA, Frequency Division Multiple Access) system, an Orthogonal Frequency-Division Multiple Access (OFDMA, Orthogonal Frequency-Division Multiple Access) system, a single-carrier FDMA (SC-FDMA) system, a General Packet Radio Service (GPRS, General Packet Radio Service) system, a Long Term Evolution (LTE, Long Term Evolution) system, and other communications systems.

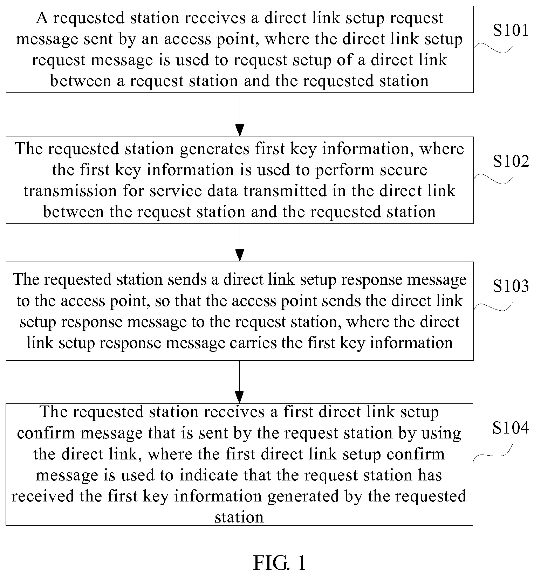

FIG. 1 is a flowchart of an embodiment of a direct link setup method according to the present invention. As shown in FIG. 1, in this embodiment, the link setup method provided in the present invention is described by using an operation performed by a requested station side in a direct link setup process as an example. The method includes:
S101. A requested station receives a direct link setup request message sent by an access point, where the direct link setup request message is used to request setup of a direct link between a request station and the requested station.
S102. The requested station generates first key information, where the first key information is used to perform secure transmission for service data transmitted in the direct link between the request station and the requested station.
S103. The requested station sends a direct link setup response message to the access point, so that the access point sends the direct link setup response message to the request station, where the direct link setup response message carries the first key information.
S104. The requested station receives a first direct link setup confirm message that is sent by the request station by using the direct link, where the first direct link setup confirm message is used to indicate that the request station has received the first key information generated by the requested station.

The request station involved in this application may be a wireless request station or a wired request station, for example, may be a station (STA), such as a sensor, an electricity meter, in various networks such as a wireless fidelity (Wireless Fidelity, WiFi) network or a cellular network. The requested station has a capability of generating the first key information, and may be a wireless requested station or a wired requested station, such as a sensor, an electricity meter, and another station. In addition, the request station and the requested station are located in a same network, for example, located in a WiFi network served by a same access point. The access point may be a network element, such as an access point (Access Point, AP) in a wireless local area network (Wireless Local Area Network, WLAN), an access point in a WiFi network, a base station (Base Transceiver Station, BTS) in a GSM network, a GPRS network, a CDMA network, or a cellular network, a base station (NodeB) in a CDMA2000 network or a WCDMA network, an evolved base station (Evolved NodeB, eNB) in an LTE network, or an access service network base station (Access Service Network Base Station, ASN BS) in a WiMAX network; or may also be a network element, such as a controller or an authenticator behind the above access points and base stations.

This application is applicable to multiple implementation scenarios, such as an implementation scenario in which an electricity meter, as a request station in a WiFi network, reports an electricity meter reading to an access point, and an implementation scenario in which a humidity and temperature sensor, as a request station, reports measured humidity and temperature to an access point, which is not listed herein one by one. In this implementation scenario, if there is a relatively long distance between the request station and the access point, the request station may use a requested station to forward service data to be reported to the access point, so as to shorten communication time between the request station and the access point. A direct link needs to be set up between the request station and the requested station to transmit the service data.

In a setup process of the direct link between the request station and the requested station, the access point is required to forward the direct link setup request message and the direct link setup response message.

In this embodiment of the present invention, after receiving the direct link setup request message forwarded by the access point, the requested station may locally generate the first key information used to perform secure transmission for the service data transmitted in the direct link between the request station and the requested station. The secure transmission may include: performing an operation such as encryption/decryption and/or integrity verification on the transmitted data. The requested station may carry the first key information to the direct link setup response message and send the direct link setup response message to the access point, so that the access point sends, to the request station, the direct link setup response message that carries the first key information. Therefore, the request station sends the service data in the direct link (that is, an air interface) between the request station and the requested station. For example, when the service data is an electricity meter reading or detection data of a sensor, in a life cycle of a first key, the request station may use the first key information to encrypt the service data; and after receiving the service data sent by the request station, the requested station may use the first key information to decrypt the received service data.

Optionally, the first key information may include the first key, or may include the first key and life cycle information of the first key. In a scenario in which the first key information includes the first key and the life cycle information of the first key, after generating the first key, the requested station may further determine a life cycle of the first key, and carry the life cycle information of the first key to the first key information and send the first key information to the access point.

Further, after sending, to the access point, the direct link setup response message that carries the first key information, the requested station may receive the first direct link setup confirm message (Confirm message) that is sent by the request station by using the direct link, where the first direct link setup confirm message is used to indicate that the request station has received the first key information generated by the requested station, and the first confirm message may carry message integrity code (Message Integrity Code, MIC) used for integrity verification.

The requested station can directly receive, from the direct link, the first direct link setup confirm message sent by the request station, instead of requiring the access point to forward the first direct link setup confirm message, thereby reducing times of directly sending a message to the access point by the request station, and effectively reducing energy consumption of the request station.

The requested station can directly receive, from the direct link, the first direct link setup confirm message sent by the request station. The requested station may perform, according to the MIC carried in the first direct link setup confirm message, integrity verification for the first direct link setup confirm message received by the requested station. If the verification succeeds, the requested station may send an acknowledgment message (Acknowledgement, ACK) to the request station by using the direct link, where the acknowledgment message is used to indicate that the integrity verification succeeds, that is, the request station correctly receives the first key information.

Because the first key has a limited life cycle, after the life cycle ends, the first key is invalid and cannot be used to perform secure transmission for the service data transmitted in the direct link between the request station and the requested station. Accordingly, optionally, before the life cycle of the first key ends, when a timer of the requested station overflows, when the request station requests an update of the first key information, or in another implementation scenario, the requested station may generate second key information and send the second key information to the access point, so that the access point forwards the second key information to the request station. Therefore, after the life cycle of the first key ends, the request station may replace the first key information with the second key information to perform secure transmission for the service data transmitted in the direct link between the request station and the requested station.

Optionally, the second key information may include a second key, or may include a second key and life cycle information of the second key. In a scenario in which the second key information includes the second key and the life cycle information of the second key, after generating the second key, the requested station may further determine a life cycle of the second key, and carry the life cycle information of the second key to the second key information and send the second key information to the access point.

The requested station may send the second key information to the access point by carrying the second key information to existing messages that are of various formats and are interacted with the access point, for example, may carry the second key information to a message in a direct link setup response format and then send the message to the access point.

The requested station may generate the second key information and send the second key information to the request station before the life cycle of the first key ends, and therefore, it is avoided that a direct link between the request station and the requested station is re-set up because the first key expires, thereby increasing a transmission throughput.

Similar to sending of the first key information to the request station, after sending the second key information to the access point, the requested station may receive a second direct link setup confirm message (Confirm message) that is sent by the request station by using the direct link, where the second direct link setup confirm message is used to indicate that the request station has received the second key information generated by the requested station, and the second direct link setup confirm message may also carry MIC used for integrity verification.

The requested station may receive the second direct link setup confirm message that is sent by the request station by using the direct link, and may perform integrity verification according to the MIC carried in the second direct link setup confirm message. If the verification succeeds, the requested station may send an ACK to the request station by using the direct link.

It should be noted that, the direct link setup request message, the direct link setup response message, the first direct link setup confirm message (Confirm message), and the second direct link setup confirm message (Confirm message) that are involved in this embodiment of the present invention not only carry the information involved in this embodiment of the present invention, but also retain existing information of various types in the foregoing messages, such as address information of the request station, address information of the requested station, and a rate collection and a capacities (Capacities) parameter that are supported by the request station or the requested station. For the existing information carried in the foregoing messages, reference may be made to a related description in an existing protocol, such as the 802.11 made by the Institute of Electrical and Electronics Engineers (Institute of Electrical and Electronics Engineers, IEEE).

According to the link setup method provided in this embodiment of the present invention, after receiving a direct link setup request message forwarded by an access point, a requested station adds, to a direct link setup response message to be returned to the access point, key information generated by the requested station, so that after the access point returns the direct link setup response message to a request station, the request station can perform, according to the key, secure transmission for service data transmitted in a direct link between the request station and the requested station, so as to save a signaling overhead in a setup process of the link between the request station and the requested station.

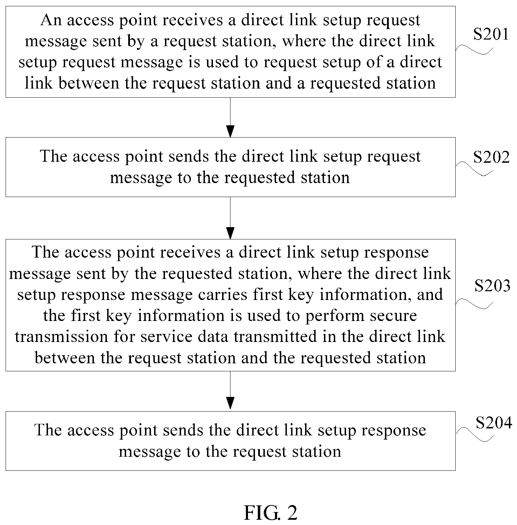

FIG. 2 is a flowchart of another embodiment of a direct link setup method according to the present invention. As shown in FIG. 2, in this embodiment, the link setup method provided in the present invention is described by using an operation performed by an access point side in a direct link setup process as an example. The method includes:
S201. An access point receives a direct link setup request message sent by a request station, where the direct link setup request message is used to request setup of a direct link between the request station and a requested station.
S202. The access point sends the direct link setup request message to the requested station.
S203. The access point receives a direct link setup response message sent by the requested station, where the direct link setup response message carries first key information, and the first key information is used to perform secure transmission for service data transmitted in the direct link between the request station and the requested station.
S204. The access point sends the direct link setup response message to the request station.

After receiving the direct link setup request message sent by the request station, the access point may forward the direct link setup request message to the requested station.

After receiving the direct link setup request message forwarded by the access point, the requested station may locally generate the first key information used to perform secure transmission for the service data transmitted in the direct link between the request station and the requested station. The requested station may carry the first key information to the direct link setup response message and send the direct link setup response message to the access point. After receiving the direct link setup response message that carries the first key information, the access point may forward the direct link setup response message to the request station.

Optionally, before a life cycle of a first key ends, the requested station may generate second key information and send the second key information to the access point. The access point may forward the second key information to the request station, so that after the life cycle of the first key ends, the request station may replace the first key information with the second key information to perform secure transmission for the service data transmitted in the direct link between the request station and the requested station.

It should be noted that, as a feasible implementation manner, the direct link setup request message and the direct link setup response message may be encapsulated in a data frame format and forwarded by the access point. In this implementation scenario, the access point may not parse the foregoing messages but only executes a message forwarding operation. This scenario is a tunneled direct link setup process.

As another feasible implementation manner, the direct link setup request message and the direct link setup response message may also be forwarded by the access point in a management frame format. In this implementation scenario, the access point may parse the foregoing messages, so as to manage that the request station communicates with which relay. This implementation scenario is a non-tunneled direct link setup process.

According to the link setup method provided in this embodiment, after an access point forwards, to a requested station, a direct link setup request message sent by a request station, the access point receives a direct link setup response message that is returned by the requested station and carries key information generated by the requested station; and after the access point returns the direct link setup response message to the request station, the request station can encrypt/decrypt, according to the key information, service data transmitted in a direct link between the request station and the requested station, so as to save a signaling overhead in a setup process of the link between the request station and the requested station.

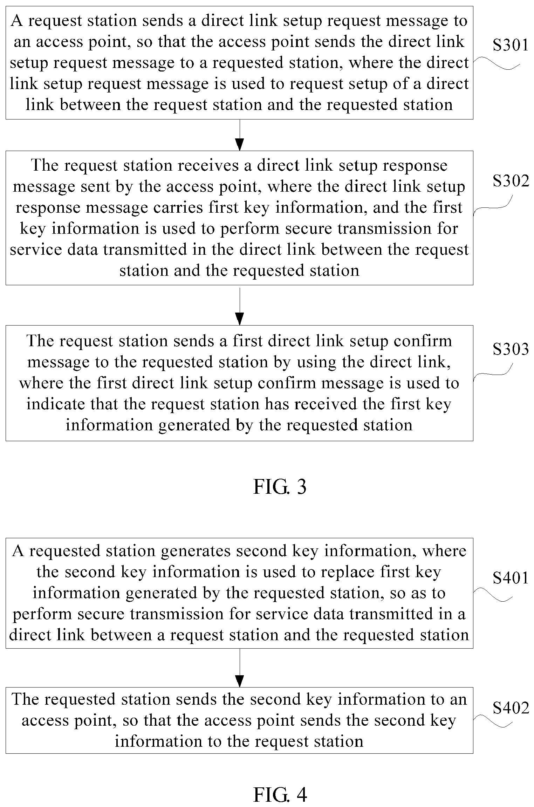

FIG. 3 is a flowchart of another embodiment of a direct link setup method according to the present invention. As shown in FIG. 3, in this embodiment, the direct link setup method provided in the present invention is described by using an operation performed by a request station side in a direct link setup process as an example. The method includes:
S301. A request station sends a direct link setup request message to an access point, so that the access point sends the direct link setup request message to a requested station, where the direct link setup request message is used to request setup of a direct link between the request station and the requested station.
S302. The request station receives a direct link setup response message sent by the access point, where the direct link setup response message carries first key information, and the first key information is used to perform secure transmission for service data transmitted in the direct link between the request station and the requested station.
S303. The request station sends a first direct link setup confirm message to the requested station by using the direct link, where the first direct link setup confirm message is used to indicate that the request station has received the first key information generated by the requested station.

In an implementation scenario in which the requested station is required to forward service data when there is a relatively long distance between the request station and the access point, the request station may initiate the setup of the direct link to the requested station. However, in the setup process of the direct link between the request station and the requested station, the access point is required to forward the direct link setup request message and the direct link setup response message.

After receiving the direct link setup request message forwarded by the access point, the requested station may locally generate the first key information used to encrypt/decrypt the service data transmitted in the direct link between the request station and the requested station. In addition, the first key information is carried to the direct link setup response message, and the direct link setup response message is sent to the access point. The request station may receive the direct link setup response message that carries the first key information and is forwarded by the access point.

The first key information may include a first key, or may include a first key and life cycle information of the first key.

After the direct link between the request station and the requested station is set up, the request station may use the first key information to encrypt the service data, such as an electricity meter reading and detection data of a sensor.

It should be noted that after receiving the direct link setup response message sent by the access point, the request station may return the first direct link setup confirm message to the requested station by using the direct link, so as to indicate that the first key information generated by the requested station has been received.

Further, before a life cycle of the first key ends, the request station may further receive second key information forwarded by the access point, where the second key information is generated by the requested station before the life cycle of the first key ends. Therefore, after the life cycle of the first key ends, the request station may use the second key information to encrypt the service data transmitted in the direct link between the request station and the requested station.

The second key information may include a second key, or may include a second key and life cycle information of the second key.

Similarly, after receiving the second key information sent by the access point, the request station may send a second direct link setup confirm message to the requested station by using the direct link, where the second direct link setup confirm message is used to indicate that the second key information generated by the requested station has been received.

According to the link setup method provided in this embodiment, after sending a direct link setup request message to an access point, a request station may receive a direct link setup response message that is returned by the access point and carries key information generated by a requested station; and the request station can perform, according to the key, secure transmission for service data transmitted in a direct link between the request station and the requested station, so as to save a signaling overhead in a setup process of the link between the request station and the requested station.

FIG. 4 is a flowchart of yet another embodiment of a key updating method according to the present invention. As shown in FIG. 4, the method includes:
S401. A requested station generates second key information, where the second key information is used to replace first key information generated by the requested station, so as to perform secure transmission for service data transmitted in a direct link between a request station and the requested station.
S402. The requested station sends the second key information to an access point, so that the access point sends the second key information to the request station.

The first key information may be any key information generated by the requested station, for example, may be key information generated in a setup process of the direct link between the requested station and the request station, or may be key information generated in a process of service transmission in the direct link between the requested station and the request station.

Because a first key has a life cycle, after the life cycle ends, the first key is invalid and cannot be used to perform secure transmission for the service data transmitted in the direct link between the request station and the requested station. Accordingly, before the life cycle of the first key ends, when a timer of the requested station overflows, when the request station requests an update of the first key, or in another implementation scenario, the requested station may generate second key information and send the second key information to the access point, so that the access point forwards the second key information to the request station. Therefore, after the life cycle of the first key ends, the request station may replace the first key information with the second key information to perform secure transmission for the service data transmitted in the direct link between the request station and the requested station.

Optionally, the second key information may include a second key, or may include a second key and a life cycle of the second key. When the second key information includes the second key and the life cycle of the second key, after generating the second key, the requested station may further determine the life cycle of the second key, and carry life cycle information of the second key to the second key information and send the second key information to the access point.

The requested station may send the second key information to the access point by carrying the second key information to existing messages that are of various formats and are interacted with the access point, for example, may carry the second key information to a message in a direct link setup response format and then send the message to the access point.

The requested station may generate the second key information and send the second key information to the request station before the life cycle of the first key ends, and therefore, it is avoided that a direct link between the request station and the requested station is re-set up because the first key expires, thereby increasing a transmission throughput.

After sending the second key information to the access point, the requested station may receive a second direct link setup confirm message (Confirm message) that is sent by the request station by using the direct link, where the second direct link setup confirm message is used to indicate that the request station has received the second key information generated by the requested station, and the second direct link setup confirm message may also carry MIC used for integrity verification.

The requested station may receive the second direct link setup confirm message that is sent by the request station by using the direct link, and may perform integrity verification according to the MIC carried in the second direct link setup confirm message. If the verification succeeds, the requested station may send an ACK to the request station by using the direct link.

According to the key updating method provided in this embodiment, after generating second key information used to replace first key information, a requested station can return the second key information to a request station by using an access point, so that the request station replaces the first key information with the second key information to perform secure transmission for service data transmitted in a direct link between the request station and the requested station, so as to save a signaling overhead in a key updating process.

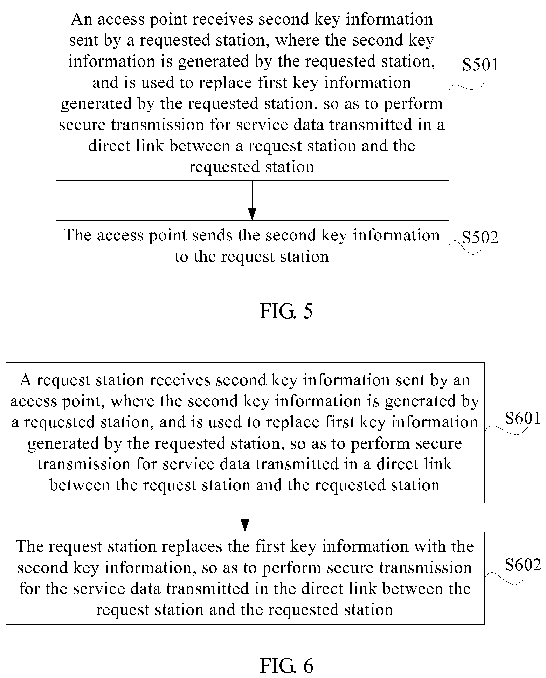

FIG. 5 is a flowchart of yet another embodiment of a key updating method according to the present invention. As shown in FIG. 5, the method includes:
S501. An access point receives second key information sent by a requested station, where the second key information is generated by the requested station, and is used to replace first key information generated by the requested station, so as to perform secure transmission for service data transmitted in a direct link between a request station and the requested station.
S502. The access point sends the second key information to the request station.

Before a life cycle of a first key ends, the requested station generates the second key information and sends the second key information to the access point. The access point may forward the second key information to the request station, so that after the life cycle of the first key ends, the request station may replace the first key information with the second key information to perform secure transmission for the service data transmitted in the direct link between the request station and the requested station.

According to the key updating method provided in this embodiment, after receiving second key information that is generated by a requested station and used to replace a first key information, an access point may forward the second key information to a request station, so that the request station replaces the first key information with the second key information to perform secure transmission for service data transmitted in a direct link between the request station and the requested station, so as to save a signaling overhead in a key updating process.

FIG. 6 is a flowchart of yet another embodiment of a key updating method according to the present invention. As shown in FIG. 6, the method includes:
S601. A request station receives second key information sent by an access point, where the second key information is generated by a requested station, and is used to replace first key information generated by the requested station, so as to perform secure transmission for service data transmitted in a direct link between the request station and the requested station.
S602. The request station replaces the first key information with the second key information, so as to perform secure transmission for the service data transmitted in the direct link between the request station and the requested station.

Before a life cycle of a first key ends, the request station may further receive the second key information forwarded by the access point, where the second key information is generated by the requested station before the life cycle of the first key ends. Therefore, after the life cycle of the first key ends, the request station may use the second key information to encrypt the service data transmitted in the direct link between the request station and the requested station.

The second key information is used to replace the first key information generated by the requested station, so as to perform secure transmission for the service data transmitted in the direct link between the request station and the requested station. Optionally, the second key information may include life cycle information of a second key.

After receiving the second key information sent by the access point, the request station may send a second direct link setup confirm message to the requested station by using the direct link, where the second direct link setup confirm message is used to indicate that the second key information generated by the requested station has been received.

According to the key updating method provided in this embodiment, a request station may receive second key information that is forwarded by an access point, generated by a requested station, and used to replace first key information, and then replace the first key information with the second key information to perform secure transmission for service data transmitted in a direct link between the request station and the requested station, so as to save a signaling overhead in a key updating process.

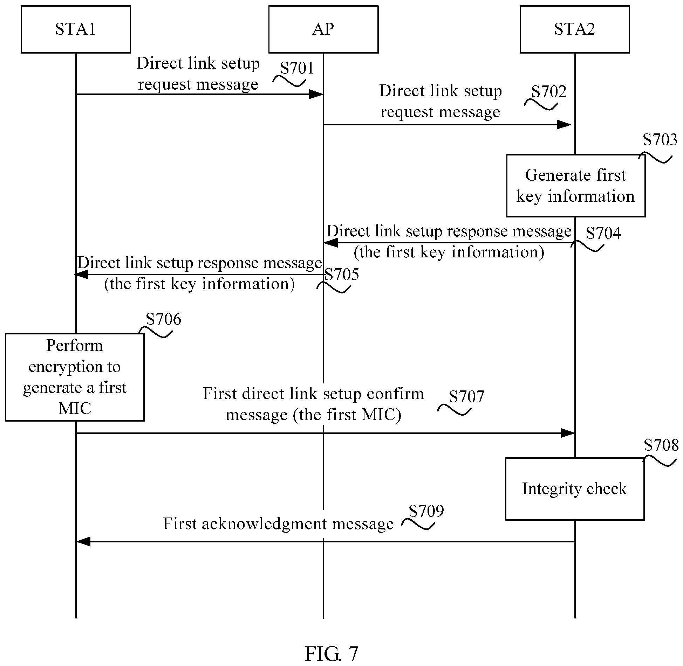

FIG. 7 is a flowchart of another embodiment of a link setup method according to the present invention. As shown in FIG. 7, this embodiment provides an interaction process of a request station (STA1), an access point (AP), and a requested station (STA2) in a link setup process.

It should be noted that the STA1 has determined that it is necessary to transmit service data to the AP by using the STA2, and the STA1 has selected the STA2 (that is, address information of the STA2 is obtained). Before a direct link between the STA1 and the STA2 is set up, the STA1 and the STA2 separately associate with a same AP, and establish corresponding robust security network associations (Robust Security Network Association, RSNA). That is, a secure bidirectional link is set up both between the STA1 and the AP and between the AP and the STA2.

The method includes:
S701. The STA1 sends a direct link setup request message to the AP, where the direct link setup request message is used to request setup of a direct link between the request station and the requested station.

The direct link setup request message (Setup Request) sent by the STA1 to the AP includes: address information of the STA1, address information of the STA2, and a rate collection, a capacities (Capacities) parameter, and the like that are supported by the STA1. The direct link setup request message is encrypted by using a PTK generated when the STA1 is associated with the AP. A process in which a key 1 (PTK1) is generated when the STA1 is associated with the AP is the prior art, which is not described herein again.

Optionally, an association identifier (Associated Identifier, AID) may be used as the address information of the STA1 and the address information of the STA2 that are carried in the direct link setup request message. The AID may be an association identifier allocated by the AP to the STA1 when the STA1 is associated with the AP. Generally a length of the association identifier is 16 bits. Compared with a media access control (Media Access Control, MAC) address of 48 bits, using an association identifier of a shorter length when transmission is performed by the STA2 can reduce transmission burden and shorten a header of a data frame after link setup, thereby increasing a throughput of an effective load.

It should be noted that in the setup process of the direct link between the STA1 and the STA2, an AID may be used as the address information of the STA1 and the STA2 separately. After the direct link between the STA1 and the STA2 is set up, a short MAC frame header format of two addresses that is shown in the following Table 1 may be used when the STA1 needs to send service data to the STA2.

**Table 1**

| Octets: 2 | 2 | 2 | 2 |
|---|---|---|---|
| Frame Control | AID (A1 for STA1) | AID (A2 for STA2) | Sequence Control |

In Table 1, Frame Control represents a frame control word and occupies two bytes; A1 for STA1 is an AID of the STA1 and occupies two bytes; A2 for STA2 is an AID of the STA2 and occupies two bytes; and Sequence Control carries a serial number of a data unit and a serial number of a data unit segment and occupies two bytes.

S702: The AP sends the direct link setup request message to the STA2.

The AP may select, according to a service requirement, whether it is required to parse the direct link setup request message. For example, to manage each STA1 in a range of the AP to ensure service transmission quality, the AP may parse the setup request message, so as to learn which STA2 is used by the STA1 to forward service data.

The direct link setup request message forwarded by the AP to the STA2 is encrypted by using a key 2 (PTK2) generated when the STA2 is associated with the AP.

S703. The STA2 generates first key information, where the first key information is used to perform secure transmission for service data transmitted in the direct link between the STA1 and the STA2.

The STA2 may generate a unique random number that is not the same as another key and use the random number as a first key, or may generate a first key in another key generating manner, which is not limited herein.

Optionally, the STA2 may further determine a life cycle of a first key.

S704. The STA2 sends a direct link setup response message to the AP, where the direct link setup response message carries the first key information.

The first key information includes a first key, or may include a first key and life cycle information of the first key.

Similar to the direct link setup request message, a TDLS setup response message sent by the STA2 to the AP includes: the address information of the STA1, the address information of the STA2, and a rate collection, a capacities Capacities parameter, and the like that are supported by the STA2. Optionally, an AID may also be used as the address information of the STA1 and the address information of the STA2. In addition, the direct link setup response message further carries the first key information generated by the STA2.

The direct link setup response message sent by the STA2 to the AP is also encrypted by using the key 2 (PTK2) generated when the STA2 is associated with the AP.

After sending the direct link setup response message to the AP, the STA2 may be in an active state all the time until a first confirm message in S707 is received or a timer of the STA2 overflows.

S705. The AP sends the direct link setup response message to the request station.

The direct link setup response message forwarded by the AP to the STA1 is encrypted by using the key 1 (PTK1) generated when the STA1 is associated with the AP.

S706. The STA1 uses the first key information to encrypt a first direct link setup confirm message to generate first message integrity code MIC.

S707. The STA1 sends the first direct link setup confirm message to the STA2 by using the direct link, where the first direct link setup confirm message carries the first MIC.

The first direct link setup confirm message (Confirm message) at least includes: the address information of the STA1, the address information of the STA2, the first MIC, and the like.

Optionally, an AID may be used as the address information of the STA1 and the address information of the STA2.

S708. The STA2 performs, according to the first MIC, integrity verification for a first key received by the request station. If the verification succeeds, S709 is performed; otherwise, the process ends.

S709. The STA2 sends a first acknowledgment message to the STA1 by using the direct link, where the first acknowledgment message is used to indicate that the integrity verification performed for the first key information received by the STA1 succeeds.

A process of generating the first MIC according to the first key information by the STA1 and a process of performing, by the STA2 according to the first MIC, the integrity verification for the first key information received by the STA1 are the prior art, which are not described herein again. If the integrity verification performed by the STA2 fails, the STA2 does not send a first acknowledgment message to the STA1, and setup of the direct link between the STA1 and the STA2 fails.

After setup of the direct link between the STA1 and the STA2 is complete, the STA1 may use the first key information to encrypt service data sent in the direct link to the STA2, and then the STA2 transmits the service data to the AP. The service data forwarded by the STA2 to the AP may be encrypted by the key 2 (PTK2) generated when the STA2 is associated with the AP.

Optionally, in a process of sending the service data by the STA1 to the AP, the STA1 may also select whether to forward the service data by using the STA2. The STA1 may carry a 1-bit indicator bit to a signal unit, a signal A unit, or a signal B unit (Signal or Signal A or Signal B, SIGA) in a frame header of a physical layer (Physical Layer, PHY layer) of the service layer, and indicate, by using the indicator bit, whether the STA2 forwards a packet. For example, the STA1 may set the indicator bit to 1, so as to indicate that the STA2 forwards the packet; and when the indicator bit is set to 0, it indicates that the STA2 does not forward the packet, and if the STA2 receives a packet sent by the STA1, the STA2 may perform discarding processing. It should be noted that because a cyclic redundancy check (Cyclic Redundancy Check, CRC) on a physical layer in the 11ah specifications only has four bits, and an indicator bit in a physical header is vulnerable to interference, the STA2 may further analyze address information in a MAC header of a data frame to determine whether to forward the data frame to the AP.

According to the link setup method provided in this embodiment, after a request station sends a direct link setup request message to an access point, the access point may send the setup request message to a requested station; and after receiving the direct link setup request message forwarded by the access point, the requested station adds, to a direct link setup response message to be returned to the access point, key information generated by the requested station, so that after the access point returns the setup response message to the request station, the request station can perform secure transmission for service data transmitted in a direct link between the request station and the requested station, so as to save a signaling overhead in a setup process of the link between the request station and the requested station. The requested station can directly receive, from the direct link, a direct link setup confirm message sent by the request station, instead of requiring the access point to forward the confirm message, thereby reducing times of directly sending a message to the access point by the request station, and effectively reducing energy consumption of the request station.

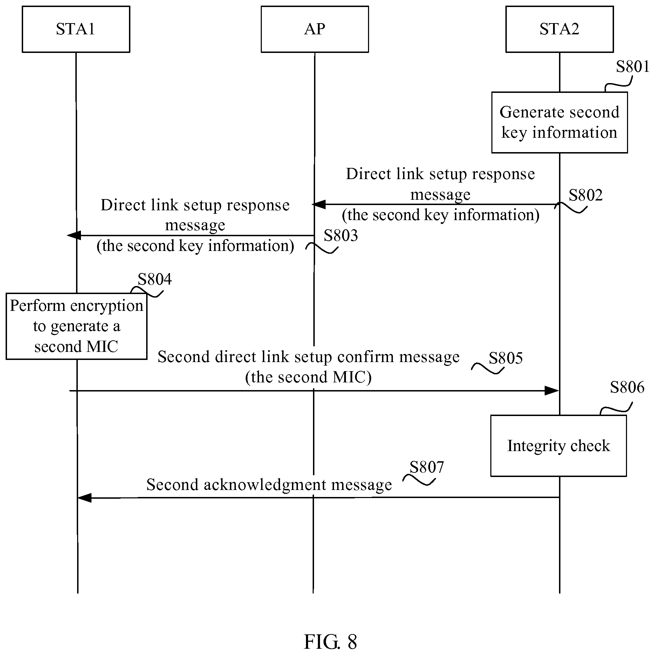

FIG. 8 is a flowchart of another embodiment of a key updating method according to the present invention. As shown in FIG. 8, the method includes:
S801. A STA2 generates second key information, where the second key information is used to replace first key information to perform secure transmission for service data transmitted in a direct link between a STA1 and the STA2.

Optionally, the STA2 may further determine a life cycle of a second key.

Similar to generating of a first key, the STA2 may generate a unique random number that is not the same as another key (including the first key) and use the random number as a second key, or may generate a second key in another key generating manner, which is not limited herein.

S802. The STA2 sends the second key information to an AP.

The second key information includes the second key, or may include the second key and life cycle information of the second key.

The second key information sent by the STA2 to the AP may use various existing message formats. Optionally, a message format of a direct link setup response message (Setup Response) may be used. The new message may include: address information of the STA1, address information of the STA2, a rate collection and a capacities (Capacities) parameter that are supported by the STA2, and the second key information. The message may be transmitted by using an RSNA between the STA2 and the AP, and may be encrypted by using a key 2 (PTK2) generated when the STA2 is associated with the AP.

Optionally, an AID may be used as the address information of the STA1 and the address information of the STA2.

S803. The AP sends the second key information to the STA1.

Similar to S802, the AP may select, according to a service requirement, whether it is required to parse a message that carries the second key and the life cycle information of the second key. The AP may use a key 1 (PTK1) generated when the STA1 is associated with the AP, to encrypt a message that carries the second key information.

S804. The STA1 uses the second key information to encrypt a second direct link setup confirm message to generate a second MIC.

S805. The STA1 sends the second direct link setup confirm message to the STA2 by using the direct link, where the second direct link setup confirm message carries the second MIC.

S806. The STA2 performs integrity verification for a third acknowledgment message according to the second MIC. If the verification succeeds, S807 is performed; otherwise, the process ends.

S807. The STA2 sends a second acknowledgment message to the STA1, where the second acknowledgment message is used to indicate that the integrity verification performed for the second key received by the STA1 succeeds.

A process of S804 to S807 is similar to a process of S706 to S709, and reference may be made to a related description of S706 to S709.

According to the key updating method provided in this embodiment, a requested station may generate a new key and send the new key to a request station before a life cycle of a key ends, and therefore, it is avoided that a direct link between the request station and the requested station is re-set up because the key expires, thereby increasing a transmission throughput.

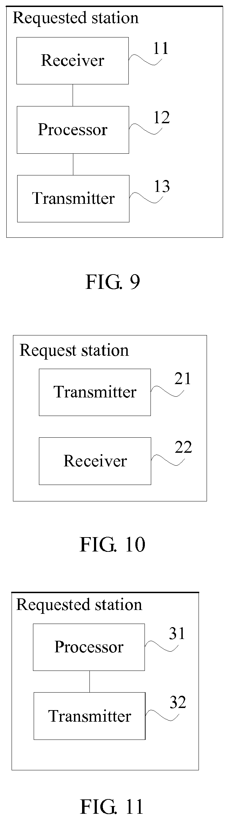

FIG. 9 is a schematic structural diagram of an embodiment of a requested station according to the present invention. As shown in FIG. 9, the requested station includes a receiver 11, a processor 12, and a transmitter 13.

The receiver 11 is configured to receive a direct link setup request message sent by an access point, where the direct link setup request message is used to request setup of a direct link between a request station and the requested station.

The processor 12 is configured to generate first key information, where the first key information is used to perform secure transmission for service data transmitted in the direct link between the request station and the requested station.

The transmitter 13 is configured to send a direct link setup response message to the access point, so that the access point sends the direct link setup response message to the request station, where the direct link setup response message carries the first key information.

The receiver 11 may further be configured to receive a first direct link setup confirm message that is sent by the request station by using the direct link, where the first direct link setup confirm message is used to indicate that the request station has received the first key information generated by the requested station.

Optionally, the first key information sent by the transmitter 13 includes a first key, or includes a first key and a life cycle of the first key; and when the first key information includes the first key and the life cycle of the first key, the processor 12 may further be configured to determine the life cycle of the first key.

Optionally, the processor 12 may further be configured to: generate second key information, where the second key information is used to replace the first key information and perform secure transmission for service data transmitted in the direct link between the request station and the requested station.

Correspondingly, the transmitter 13 may further be configured to send the second key information to the access point, so that the access point sends the second key information to the requested station.

Optionally, the second key information sent by the transmitter 13 includes a second key, or a second key and a life cycle of the second key; and when the second key information includes the second key and the life cycle of the second key, the processor 12 may further be configured to determine the life cycle of the second key.

Optionally, the receiver 11 may further be configured to receive a second direct link setup confirm message that is sent by the request station by using the direct link, where the second direct link setup confirm message is used to indicate that the request station has received the second key information generated by the requested station.

The requested station provided in this embodiment is an execution device of the direct link setup methods provided in the embodiments of the present invention. For specific processes of executing the direct link setup methods by the requested station, reference may be made to related descriptions in the method embodiments shown in FIG. 3 and FIG. 7, which are not described herein again.

After receiving a direct link setup request message forwarded by an access point, a requested station in this embodiment adds, to a direct link setup response message to be returned to the access point, key information generated by the requested station, so that after the access point returns the direct link setup response message to a request station, the request station can perform, according to the key, secure transmission for service data transmitted in a direct link between the request station and the requested station, so as to save a signaling overhead in a setup process of the link between the request station and the requested station.

FIG. 10 is a schematic structural diagram of an embodiment of a request station according to the present invention. As shown in FIG. 10, the request station includes a transmitter 21 and a receiver 22.

The transmitter 21 is configured to send a direct link setup request message to an access point, so that the access point sends the direct link setup request message to a requested station, where the direct link setup request message is used to request setup of a direct link between the request station and the requested station.

The receiver 22 is configured to receive a direct link setup response message sent by the access point, where the direct link setup response message carries first key information, and the first key information is used to perform secure transmission for service data transmitted in the direct link between the request station and the requested station.

The transmitter 21 is further configured to send a first direct link setup confirm message to the requested station by using the direct link, where the first direct link setup confirm message is used to indicate that the request station has received the first key information generated by the requested station.

Optionally, the first key information received by the receiver 22 may include a first key, or include a first key and life cycle information of the first key.

Optionally, the receiver 22 may further be configured to receive second key information sent by the access point, where the second key information is generated by the requested station, and the second key information is used to replace the first key information to perform secure transmission for the service data transmitted in the direct link between the request station and the requested station.

Optionally, the second key information received by the receiver 22 may include a second key, or include a second key and life cycle information of the second key.

Optionally, the transmitter 21 may further be configured to send a second direct link setup confirm message to the requested station by using the direct link, where the second direct link setup confirm message is used to indicate that the request station has received the second key information generated by the requested station.

The request station provided in this embodiment is an execution device of the direct link setup methods provided in the embodiments of the present invention. For specific processes of executing the direct link setup methods by the request station, reference may be made to related descriptions in the method embodiments shown in FIG. 1 and FIG. 7, which are not described herein again.

After sending a direct link setup request message to an access point, a request station provided in this embodiment may receive a direct link setup response message that is returned by the access point and carries key information generated by a requested station; and the request station can perform, according to the key, secure transmission for service data transmitted in a direct link between the request station and the requested station, so as to save a signaling overhead in a setup process of the link between the request station and the requested station.

FIG. 11 is a schematic structural diagram of another embodiment of a requested station according to the present invention. As shown in FIG. 11, the requested station may include a processor 31 and a transmitter 32.

The processor 31 is configured to generate second key information, where the second key information is used to replace first key information generated by the requested station, so as to perform secure transmission for service data transmitted in a direct link between a request station and the requested station.

The transmitter 32 is configured to send the second key information to an access point, so that the access point sends the second key information to the request station.

Optionally, the second key information sent by the transmitter 32 may include a second key, or a second key and a life cycle of the second key; and when the second key information includes the second key and the life cycle of the second key, the processor 31 may further be configured to determine the life cycle of the second key.

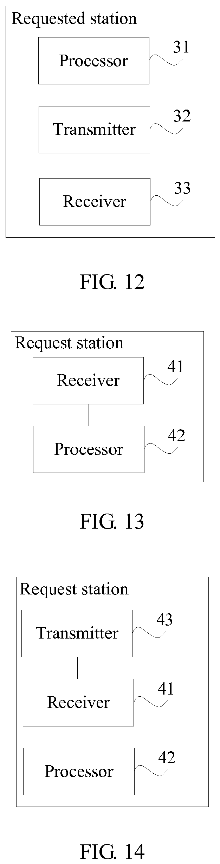

FIG. 12 is a schematic structural diagram of another embodiment of a requested station according to the present invention. As shown in FIG. 12, optionally, based on the embodiment shown in FIG. 11, the requested station may further include:
a receiver 33, configured to receive a direct link setup confirm message sent by a request station by using a direct link, where the direct link setup confirm message is used to indicate that the request station has received the key information generated by the requested station.

The requested station provided in this embodiment of the present invention is an execution device of the key updating methods provided in the embodiments of the present invention. For specific processes of executing the key updating methods by the requested station, reference may be made to related descriptions in the method embodiments shown in FIG. 4 and FIG. 8, which are not described herein again.

After generating second key information used to replace first key information, a requested station provided in this embodiment can return the second key information to a request station by using an access point, so that the request station replaces the first key information with the second key information to perform secure transmission for service data transmitted in a direct link between the request station and the requested station, so as to save a signaling overhead in a key updating process.

FIG. 13 is a schematic structural diagram of another embodiment of a request station according to the present invention. As shown in FIG. 13, the request station includes a receiver 41 and a processor 42.

The receiver 41 is configured to receive second key information sent by an access point, where the second key information is generated by a requested station, and is used to replace first key information generated by the requested station, so as to perform secure transmission for service data transmitted in a direct link between the request station and the requested station.

The processor 42 is configured to replace the first key information with the second key information, so as to perform secure transmission for the service data transmitted in the direct link between the request station and the requested station.

Optionally, the second key information received by the receiver 41 may include a second key, or include a first key information and life cycle information of the second key.

FIG. 14 is a schematic structural diagram of another embodiment of a request station according to the present invention. As shown in FIG. 14, based on the embodiment shown in FIG. 13, the request station may further include:
a transmitter 43, configured to send a direct link setup confirm message to a requested station by using a direct link, where the direct link setup confirm message is used to indicate that the request station has received the key information generated by the requested station.

The request station provided in this embodiment of the present invention is an execution device of the key updating methods provided in the embodiments of the present invention. For specific processes of executing the key updating methods by the request station, reference may be made to related descriptions in the method embodiments shown in FIG. 6 and FIG. 8, which are not described herein again.

The request station provided in this embodiment may receive second key information that is forwarded by an access point, generated by a requested station, and used to replace a first key information, and then replace the first key information with the second key information to perform secure transmission for service data transmitted in a direct link between the request station and the requested station, so as to save a signaling overhead in a key updating process.

It may be clearly understood by persons skilled in the art that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or part of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present application, but not for limiting the present application. Although the present application is described in detail with reference to the foregoing embodiments, persons of ordinary skill in the art should understand that they may still make modifications to the technical solutions described in the foregoing embodiments or make equivalent replacements to some technical features thereof, as long as such modifications or replacements do not cause the essence of corresponding technical solutions to depart from the scope of the technical solutions of the embodiments of the present application.

## Claims

1. A direct link setup method, comprising:
sending (S701), by a request station, a direct link setup request message to an access point;
sending (S702), by the access point, the direct link setup request message to a requested station, wherein the direct link setup request message is used to request setup of a direct link between the request station and the requested station;
generating (S703), by the requested station, first key information, wherein the first key information is used to perform secure transmission for service data transmitted in the direct link between the request station and the requested station;
sending (S704), by the requested station, a direct link setup response message to the access point, wherein the direct link setup response message carries the first key information;
sending (S705), by the access point, the direct link setup response message to the request station;
receiving, by the request station, the direct link setup response message sent by the access point;
encrypting (S706), by the request station, a first direct link setup confirm message using the first key information, to generate first message integrity code MIC; wherein the first direct link setup confirm message is used to indicate that the request station has received the first key information;
sending (S707), by the request station, a first direct link setup confirm message to the requested station, wherein the first direct link setup confirm message carries the first MIC;
performing (S708), by the requested station, integrity verification for the first key information received by the request station according to the first MIC;
sending (S709), by the requested station, a first acknowledgment message to the request station by using a direct link when the integrity verification for the first key information succeeds, wherein the first acknowledgment message is used to indicate that the integrity verification performed for the first key information received by the request station succeeds; **characterized in that** the method further comprises:
receiving, by the request station, second key information sent by the access point, wherein the second key information is generated by the requested station, and the second key information is used to replace the first key information to perform secure transmission for the service data transmitted in the direct link between the request station and the requested station;
sending, by the request station, a second direct link setup confirm message to the requested station by using the direct link, wherein the second direct link setup confirm message is used to indicate that the request station has received the second key information generated by the requested station.

2. The method according to claim 1, wherein the first key information comprises a first key, or comprises the first key and life cycle information of the first key.

3. The method according to claim 1, wherein the second key information comprises a second key, or comprises the second key and life cycle information of the second key.

## Patentansprüche

1. Verfahren zur Herstellung einer direkten Verbindung, umfassend:
Senden (S701), durch eine Anforderungsstation, einer Anforderungsnachricht zur Herstellung einer direkten Verbindung an einen Zugangspunkt;
Senden (S702), durch den Zugangspunkt, der Anforderungsnachricht zur Herstellung einer direkten Verbindung an eine angeforderte Station, wobei die Anforderungsnachricht zur Herstellung einer direkten Verbindung verwendet wird, die Herstellung einer direkten Verbindung zwischen der Anforderungsstation und der angeforderten Station anzufordern;
Erzeugen (S703), durch die angeforderte Station, erster Schlüsselinformationen, wobei die ersten Schlüsselinformationen verwendet werden, eine sichere Übertragung für Dienstdaten, die in der direkten Verbindung zwischen der Anforderungsstation und der angeforderten Station übertragen werden, durchzuführen;
Senden (S704), durch die angeforderte Station, einer Antwortnachricht zur Herstellung einer direkten Verbindung an den Zugangspunkt, wobei die Antwortnachricht zur Herstellung einer direkten Verbindung die ersten Schlüsselinformationen trägt;
Senden (S705), durch den Zugangspunkt, der Antwortnachricht zur Herstellung einer direkten Verbindung an die Anforderungsstation;
Empfangen, durch die Anforderungsstation, der von dem Zugangspunkt gesandten Antwortnachricht zur Herstellung einer direkten Verbindung;
Verschlüsseln (S706), durch die Anforderungsstation, einer ersten Bestätigungsnachricht zur Herstellung einer direkten Verbindung unter Verwendung der ersten Schlüsselinformationen, um ersten Nachrichtenintegritätscode MIC zu erzeugen; wobei die erste Bestätigungsnachricht zur Herstellung einer direkten Verbindung verwendet wird, anzugeben, dass die Anforderungsstation die ersten Schlüsselinformationen empfangen hat;
Senden (S707), durch die Anforderungsstation, einer ersten Bestätigungsnachricht zur Herstellung einer direkten Verbindung an die angeforderte Station, wobei die erste Bestätigungsnachricht zur Herstellung einer direkten Verbindung den ersten MIC trägt;
Durchführen (S708), durch die angeforderte Station, von Integritätsverifikation für die von der Anforderungsstation empfangenen ersten Schlüsselinformationen gemäß dem ersten MIC;
Senden (S709), durch die angeforderte Station, einer ersten Quittungsnachricht an die Anforderungsstation unter Verwendung einer direkten Verbindung, wenn die Integritätsverifikation für die ersten Schlüsselinformationen erfolgreich ist, wobei die erste Quittungsnachricht verwendet wird, anzugeben, dass die Integritätsverifikation, durchgeführt für die ersten Schlüsselinformationen, empfangen von der Anforderungsstation, erfolgreich ist;
**dadurch gekennzeichnet, dass** das Verfahren ferner umfasst:
Empfangen, durch die Anforderungsstation, zweiter Schlüsselinformationen, gesandt von dem Zugangspunkt, wobei die zweiten Schlüsselinformationen von der angeforderten Station erzeugt werden und die zweiten Schlüsselinformationen verwendet werden, die ersten Schlüsselinformationen zu ersetzen, um sichere Übertragung für die Dienstdaten durchzuführen, die in der direkten Verbindung zwischen der Anforderungsstation und der angeforderten Station übertragen werden;
Senden, durch die Anforderungsstation, einer zweiten Bestätigungsnachricht zur Herstellung einer direkten Verbindung an die angeforderte Station unter Verwendung der direkten Verbindung, wobei die zweite Bestätigungsnachricht zur Herstellung einer direkten Verbindung verwendet wird, anzugeben, dass die Anforderungsstation die zweiten Schlüsselinformationen, erzeugt von der angeforderten Station, empfangen hat.

2. Verfahren nach Anspruch 1, wobei die ersten Schlüsselinformationen einen ersten Schlüssel umfassen oder den ersten Schlüssel und Lebenszyklus-Informationen des ersten Schlüssels umfassen.

3. Verfahren nach Anspruch 1, wobei die zweiten Schlüsselinformationen einen zweiten Schlüssel umfassen oder den zweiten Schlüssel und Lebenszyklus-Informationen des zweiten Schlüssels umfassen.

## Revendications

1. Procédé d'établissement de liaison directe, comprenant :
l'envoi (S701), par une station demandeuse, d'un message de demande d'établissement de liaison directe à un point d'accès ;
l'envoi (S702), par le point d'accès, du message de demande d'établissement de liaison directe à une station demandée, dans lequel le message de demande d'établissement de liaison directe est utilisé pour demander l'établissement d'une liaison directe entre la station demandeuse et la station demandée ;
la génération (S703), par la station demandée, de premières informations de clé, dans lequel les premières informations de clé sont utilisées pour effectuer la transmission sécurisée de données de service transmises sur la liaison directe entre la station demandeuse et la station demandée ;
l'envoi (S704), par la station demandée, d'un message de réponse d'établissement de liaison directe au point d'accès, dans lequel le message de réponse d'établissement de liaison directe transporte les premières informations de clé ;
l'envoi (S705), par le point d'accès, du message de réponse d'établissement de liaison directe à la station demandeuse ;
la réception, par la station demandeuse, du message de réponse d'établissement de liaison directe envoyé par le point d'accès ;
le chiffrement (S706), par la station demandeuse, d'un premier message de confirmation d'établissement de liaison directe au moyen des premières informations de clé, afin de générer un premier code d'intégrité de message MIC ; dans lequel le premier message de confirmation d'établissement de liaison directe est utilisé pour indiquer que la station demandeuse a reçu les premières informations de clé ;
l'envoi (S707) par la station demandeuse, d'un premier message de confirmation d'établissement de liaison directe à la station demandée, dans lequel le premier message de confirmation d'établissement de liaison directe transporte le premier MIC ;
l'exécution (S708) par la station demandée, d'une vérification d'intégrité pour les premières informations de clé reçues par la station demandeuse conformément au premier MIC ;
l'envoi (S709) par la station demandée, d'un premier message d'acquittement à la station demandeuse au moyen d'une liaison directe lorsque la vérification d'intégrité concernant les premières informations de clé réussit, le premier message d'acquittement étant utilisé pour indiquer que la vérification d'intégrité exécutée pour les premières informations de clé reçues par la station demandeuse a réussi ;
**caractérisé en ce que** le procédé comprend en outre :
la réception, par la station demandeuse, de secondes informations de clé envoyées par le point d'accès, les secondes informations de clé étant générées par la station demandée, et les secondes informations de clé étant utilisées pour remplacer les premières informations de clé afin d'effectuer une transmission sécurisée pour les données de service transmises sur la liaison directe entre la station demandeuse et la station demandée ;
l'envoi, par la station demandeuse, d'un second message de confirmation d'établissement de liaison directe à la station demandée, au moyen de la liaison directe, dans lequel le second message de confirmation d'établissement de liaison directe est utilisé pour indiquer que la station demandeuse a reçu les secondes informations de clé générées par la station demandée.

2. Procédé selon la revendication 1, dans lequel les premières informations de clé comprennent une première clé ou comprennent une première clé et des informations de cycle de vie de la première clé.

3. Procédé selon la revendication 1, dans lequel les secondes informations de clé comprennent une seconde clé ou comprennent la seconde clé et des informations de cycle de vie de la seconde clé.
